# EUROPÄISCHE PATENTSCHRIFT

(11) **EP 1 732 713 B1**
(45) Veröffentlichungstag und Bekanntmachung des Hinweises auf die Patenterteilung: **11.08.2010**
(21) Anmeldenummer: 05714188.9
(22) Anmeldetag: 23.03.2005
(51) Int. Cl.: B08B 7/00, B23K 9/32

(54) **REINIGUNGSVORRICHTUNG ZUM REINIGEN VON SCHWEISSBRENNERN**
CLEANING DEVICE FOR CLEANING WELDING TORCHES
DISPOSITIF DE NETTOYAGE POUR LE NETTOYAGE DE CHALUMEAUX DE SOUDAGE

(30) Priorität: 07.04.2004 AT 26004 U
(43) Veröffentlichungstag der Anmeldung: 20.12.2006
(73) Patentinhaber: Fronius International GmbH, 4363 Pettenbach (AT)
(72) Erfinder: BINDER, Georg, A-4643 Pettenbach (AT); LANGEDER, Harald, A-4643 Pettenbach (AT)
(74) Vertreter: Sonn & Partner Patentanwälte
(86) Internationale Anmeldenummer: PCT/AT2005/000106
(87) Internationale Veröffentlichungsnummer: WO 2005/097362

(56) Entgegenhaltungen:
- DE-A- 10 063 572
- DE-U- 20 216 788
- US-A- 4 838 287
- US-A1- 2003 024 917
- US-A1- 2004 016 734

## Beschreibung

Die Erfindung betrifft eine Reinigungsvorrichtung zum Reinigen von Schweißbrennern nach dem Oberbegriff des Patentanspruchs 1.

Schweißbrenner werden während des Schweißvorganges durch Spritzer geschmolzenen Metalls verunreinigt. Dabei lagern sich die Metallspritzer auch innerhalb der Gasdüse des Schweißbrenners ab und erstarren dort. In der Folge wird die Strömung des Schutzgases durch die Gasdüse durch die abgelagerten Metallspritzer gestört, so dass auch atmosphärische Luft an die Schweißstelle gelangen kann und somit den Schweißprozess negativ beeinflussen kann. Für eine qualitativ hochwertige Schweißstelle ist daher ein einwandfrei funktionierender und möglichst sauberer Schweißbrenner wichtig.

Schweißbrenner werden daher in regelmäßigen Abständen von den darauf befindlichen Metallspritzern gereinigt. Während der Reinigungszeit steht der Schweißbrenner für Schweißarbeiten nicht zur Verfügung. Daher wird angestrebt, die Reinigung möglichst rasch durchzuführen. Es existieren mechanische Verfahren zur Reinigung von Schweißbrennern, bei welchen mit Hilfe von Bürsten, Messern oder dgl. die Ablagerungen von der Spitze des Schweißbrenners entfernt werden. Mit derartigen mechanischen Reinigungsverfahren ist es jedoch nur begrenzt möglich, das Innere der Gasdüse des Schweißbrenners möglichst gut zu reinigen. Darüber hinaus werden die Bestandteile des Schweißbrenners durch die mechanischen Einwirkungen beschädigt und in der Folge deren Lebensdauer verkürzt. Durch die Beschädigungen an der Oberfläche der Teile des Schweißbrenners haften die Schweißspritzer noch besser an, so dass ein rascheres Verlegen der Gasdüse die Folge ist und der Schweißbrenner somit öfters gereinigt werden muss. Weiters sollte der Schweißbrenner vor dem Reinigungsvorgang abgekühlt werden, was die Reinigungszeit wiederum erhöht.

Die US 4 838 287 A beschreibt ein Verfahren und eine Vorrichtung zur Reinigung von Schweißbrennern, welches unter Verwendung einer mit elektrischem Strom durchflossenen Spule eine berührungslose Reinigung des Schweißbrenners ermöglicht. Zu diesem Zweck wird die Spitze des Schweißbrenners in die Öffnung der Spule eingebracht und ein entsprechender Stromimpuls angelegt. Das resultierende elektromagnetische Feld bewirkt entsprechende magnetische Kräfte, die auch auf die Ablagerungen am Schweißbrenner wirken und diese somit entfernen. Dabei erfolgt die Entfernung der Ablagerungen ohne mechanische Einwirkungen auf Teile des Schweißbrenners, weshalb diese geschont werden und somit deren Lebensdauer erhöht werden kann. Um den Schweißbrenner vor der elektromagnetischen Reinigung einerseits abzukühlen und andererseits auch die Entfernung der Verunreinigung durch entsprechende Reinigungsmittel zu erleichtern, wird der Schweißbrenner üblicherweise in eine Flüssigkeit getaucht. Diese Flüssigkeit kann aus Wasser oder aus Mischungen von Wasser mit bestimmten Lösungsmitteln bestehen. Für eine effiziente elektromagnetische Reinigung ist es von Vorteil, wenn die Metallspritzer auf dem Schweißbrenner durch das Eintauchen in eine Reinigungsflüssigkeit rasch abgekühlt werden. Diese rasche Abkühlung bewirkt aufgrund der unterschiedlichen Wärmeausdehnung der Metallspritzer und der üblicherweise aus Kupfer bestehenden Gasdüse und somit eine Verringerung der Haftung der Metallspritzer auf dem Schweißbrenner.

Eine Vorrichtung zur Reinigung von Schweißbrennern mit einer Wanne mit Flüssigkeit zum Eintauchen des Schweißbrenners und einer Spule zur elektromagnetischen Reinigung des Schweißbrenners wird beispielsweise in der WO 01/56730 A2 beschrieben. Dabei ist ein die Flüssigkeitswanne und die Spule enthaltender Ständer unmittelbar neben dem zu schweißenden Werkstück angeordnet, so dass der Schweißbrenner, welcher insbesondere auf einem Roboterarm montiert ist, auch automatisch zwischen den Schweißvorgängen gereinigt werden kann. Nachteilig dabei ist, dass auf diesem Ständer beispielsweise Versorgungseinrichtungen für die Spule keinen Platz finden, so dass diese über entsprechende Leitungen verbunden werden müssen. Über diese Leitungen zwischen der Versorgungseinrichtung und der Reinigungseinheit können von den hohen Stromimpulsen herrührende elektromagnetische Felder übertragen werden, die zu Störungen von anderen Geräten oder Steuerungen führen können.

Die DE 100 63 572 A1 betrifft ein Verfahren und eine Vorrichtung zum Reinigen von Schweißbrennern, beispielsweise in automatisierten Schweißstraßen, an Schweißrobotern und bei der Einzelfertigung, mit Hilfe eines kalten Mediums, vorzugsweise CO₂-Trockeneis, wobei ein mit CO₂-Trockeneis beladener Druckluftstrom mit Hilfe einer Strahldüse gleichmäßig oder intervallartig, einseitig auf die zu reinigende Fläche gelenkt wird und dabei eine Drehbewegung beschreibt.

Die US 2004/016734 A1 betrifft eine Reinigungsvorrichtung zum Reinigen von Schweißbrennern mit einer Vorrichtung zur elektromagnetischen Reinigung des Schweißbrenners bestehend aus einer Spule mit einer Öffnung zur Einbringung des Schweißbrenners und gegebenenfalls einer Vorrichtung zum Aufbringen von Reinigungsflüssigkeit an die Spitze des Schweißbrenners, wobei zusätzlich zur Vorrichtung für das magnetische Reinigen zumindest eine zweite Vorrichtung zum Reinigen des Schweißbrenners angeordnet ist, welche weitere Vorrichtung zum Reinigen des Schweißbrenners mittels eines kalten Mediums, insbesondere von CO₂-Trockeneis, ausgebildet ist. Dabei ist ein die Wanne für die Reinigungsflüssigkeit und die Spule enthaltender Ständer unmittelbar neben dem zu schweißenden Werkstück angeordnet, so dass der Schweißbrenner, welcher insbesondere auf einem Roboterarm montiert ist, auch automatisch zwischen den Schweißvorgängen gereinigt werden kann.

Die DE 202 16 788 U1 beschreibt eine Vorrichtung zum Reinigen von Schweißbrennern mit einer Wanne mit Flüssigkeit zum Eintauchen des Schweißbrenners und einer Spule mit einer Öffnung zur Einbringung des Schweißbrenners zur elektromagnetischen Reinigung desselben und mit einer mit der Spule verbundenen Versorgungseinrichtung, wobei die Wanne und die Spule zusammen mit einem unter der Spule angeordneten Abfallbehälter zur Aufnahme der elektromagnetisch abgereinigten Verunreinigungen in einem gemeinsamen Gehäuse angeordnet sind.

Die Aufgabe der vorliegenden Erfindung besteht in der Schaffung einer Reinigungsvorrichtung der angegebenen Art, welche ein rasches und automatisierbares Reinigen unterstützt und besonders für Schweißroboter-Anwendungen geeignet ist. Darüber hinaus soll die Vorrichtung möglichst einfach und kostengünstig aufgebaut sein.

Die erfindungsgemäße Aufgabe wird durch eine oben angegebene Vorrichtung zum Reinigen von Schweißbrennern gemäβ Anspruch 1 gelöst, wobei die Reinigungsvorrichtungen in einem gemeinsamen Gehäuse angeordnet sind, und im Gehäuse eine gemeinsame Steuervorrichtung, eine gemeinsame Ein-/Ausgabevorrichtung und eine gemeinsame Versorgungseinrichtung bzw. Stromquelle zur Steuerung, Einstellung und Energieversorgung der Reinigungsvorrichtungen angeordnet sind und, wobei weiters insbesondere im Gehäuse eine Gebläsevorrichtung angeordnet ist, um Flüssigkeitsrückstände am Schweißbrenner nach dem Reinigungsprozess zu beseitigen.

Vorteilhaft ist hierbei, dass durch den Einsatz unterschiedlicher Reinigungsverfahren in einer gemeinsamen Reinigungsvorrichtung immer das optimale Reinigungsverfahren für den Schweißbrenner eingesetzt werden kann, d.h., dass je nach Einsatzgebiet des Schweißbrenners bzw. je nach verwendeten Schweißmaterialen das bestmögliche Reinigungsverfahren ausgewählt werden kann. Gleichzeitig wird dadurch eine erhebliche Kostenreduktion einer derartigen Reinigungsvorrichtung erzielt, da für die unterschiedlichen Reinigungsvorrichtungen gemeinsame Komponenten, wie beispielsweise ein gemeinsames Gehäuse, eine gemeinsame Stromquelle, eine gemeinsame Steuervorrichtung, eine gemeinsame Ein-/Ausgabevorrichtung, usw., verwendet werden können. Auch ist es von Vorteil, dass die unterschiedlichen Vorrichtungen aufeinanderfolgend durchlaufen werden können, so dass eine noch bessere Reinigung des Schweißbrenners erzielt werden kann. Dadurch kann bei der Reinigung des Schweißbrenners der Arbeitsschritt des Bewegens des Schweißbrenners von einer Vorrichtung zur weiteren Vorrichtung möglichst kurz sein bzw. entfallen und somit die Reinigungszeit wesentlich verkürzt werden. Derartige geringfügige Positionsveränderungen erfordern jedoch nur geringe Zeit, weshalb das Reinigungsverfahren trotzdem sehr rasch durchgeführt werden kann. Im Gegensatz dazu muss bei herkömmlichen Reinigungsverfahren der Schweißbrenner während des Reinigungsvorganges von einer eigenständigen Reinigungsstation zur nächsten eigenständigen Reinigungsstation verfahren werden, wobei der Schweißbrenner jedes Mal neu positioniert werden muss und dieser Positionswechsel gegebenenfalls mehrmals wiederholt werden muss. Diese Arbeitsschritte erfordern zusätzliche Zeit und erhöhen somit die Reinigungszeit des Schweißbrenners, während der dieser nicht für Schweißprozesse zur Verfügung steht. Bei derartigen Verfahren muss bei der Inbetriebnahme des Schweißroboters die Position entsprechend der Anzahl von Reinigungsvorrichtungen, also beispielsweise zweimal, definiert werden.

Weitere vorteilhafte Ausbildungen sind in den Ansprüchen 2 bis 5 beschrieben.

Die vorliegende Erfindung wird anhand der beiliegenden Zeichnungen, welche Ausführungsbeispiele der Erfindung zeigen, näher erläutert.

Darin zeigen:
Fig. 1 eine perspektivische Ansicht einer erfindungsgemäßen Reinigungsvorrichtung;
Fig. 2 ein schaubildliche Darstellung einer Roboterschweißanlage mit einer leitungsverbunden Reinigungsvorrichtung; und
Fig. 3 ein schematische Darstellung der Reinigungsvorrichtung in Seitenansicht.

Da in der Schweißtechnik oftmals unterschiedliche Schweißmaterialien bzw. unterschiedliche Schweißdrähte 1 eingesetzt werden und somit unterschiedlich Schweißspritzer an einem Schweißbrenner 2, insbesondere an bzw. in einer Gasdüse 3, haften bleiben, oder da unterschiedliche Schweißanlangen bzw. Schweißgeräte 4 mit unterschiedlichen Schweißmaterialen eingesetzt werden, ist es oftmals notwendig, unterschiedliche Reinigungsverfahren für den Schweißbrenner 2 einzusetzen. Hierzu sind nunmehr in der erfindungsgemäßen Reinigungsvorrichtung 5 bzw. dem Reinigungsgerät unterschiedliche Vorrichtungen 6, 7 zum Reinigen des Schweißbrenners 2 angeordnet, die automatisch oder vom Benutzer entsprechend ausgewählt werden können.

Üblicherweise wird beim Stand der Technik immer nur eine einzige Vorrichtung 6 oder 7 als eigenständiges Gerät ausgeführt, sodass zur optimalen Reinigung des Schweißbrenners 2 oftmals mehrere unterschiedliche Geräte eingesetzt werden müssen. Dies hat insofern den Nachteil, da dadurch jedes unabhängige Gerät entsprechend installiert und verkabelt werden muss und gleichzeitig ein größerer Platzbedarf notwendig ist.

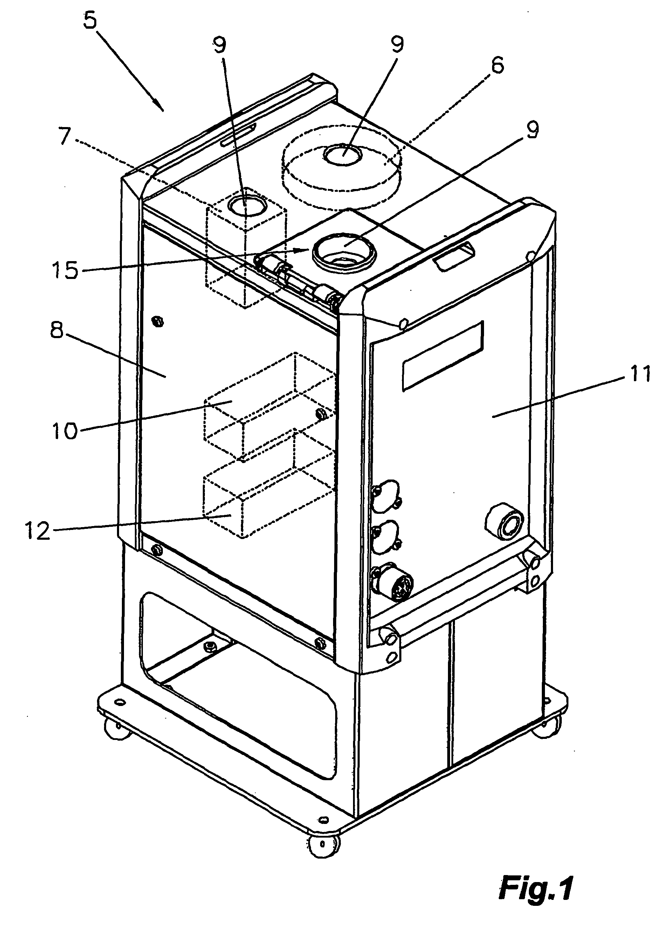

In Fig. 1 ist eine perspektivische Ansicht der Reinigungsvorrichtung 5 dargestellt, welche ein Gehäuse 8, das in Form eines Schrankes ausgebildet ist, umfasst. Das Gehäuse 8 enthält alle für die Reinigung des Schweißbrenners 2 vorgesehenen Komponenten. Im dargestellten Ausführungsbeispiel sind zwei Vorrichtungen 6, 7 angeordnet. Erfindungsgemäβ werden diese Verrichtungen 6, 7 im Inneren des Gehäuses 8 angeordnet, wobei am Gehäuse 8 Öffnungen 9 vorgesehen sind, durch die der Schweißbrenner 2 in die einzelnen Komponenten bzw. Vorrichtungen 6, 7 eingeführt werden kann. Da die Funktionsabläufe bzw. die Reinigungsverfahren, sowie die benötigen Bauelemente bereits aus dem Stand der Technik bekannt sind, wird auf diese nicht mehr näher eingegangen und es werden die Darstellungen nur mehr in Form von Funktionsblöcken schematisch angedeutet.

Beispielsweise ist in Fig.1 eine Kombination einer Vorrichtung 6 für magnetischen Reinigung mit einer Vorrichtung 7 für eine CO₂-Trockeneis-Reinigung gezeigt. Hierzu ist nunmehr vorgesehen, dass im gemeinsamen Gehäuse 8 die einzelnen Vorrichtungen 6, 7 zum Reinigen des Schweißbrenners 2 angeordnet sind. Im Gehäuse 2 sind weiters eine gemeinsame Steuervorrichtung 10, eine gemeinsame Ein-/Ausgabevorrichtung 11 und eine gemeinsame Versorgungseinrichtung 12 zur Steuerung, Einstellung und Energieversorgung der unterschiedlichen Vorrichtungen 6, 7 angeordnet. Damit wird nunmehr erreicht, dass durch die gemeinsame Nutzung von Komponenten bzw. Baugruppen, wie beispielsweise der Versorgungseinrichtung 12, der Steuervorrichtung 10, usw., eine erhebliche Platzeinsparung im Gehäuse 8 zustande kommt, wodurch der Platzbedarf eines derartigen Gerätes möglichst klein gehalten werden kann. Grundsätzlich kann der Benutzer eine bestimmte Vorrichtung 6 oder 7 auswählen, sodass anschließend von der Steuervorrichtung 10 die entsprechenden Software bzw. Steuerabläufe und Daten für diese Vorrichtung 6 oder 7 geladen und gesteuert bzw. geregelt werden können. Hierbei können am oder innerhalb des Gehäuses 8, insbesondere im Bereich der Öffnungen 9 auch Sensoren 13 angeordnet sein, wodurch von der Steuervorrichtung 10 erkannt werden kann, dass sich ein Schweißbrenner 2 in der Öffnung 9 befindet und wie die Position, insbesondere die Eindringtiefe, des Schweißbrenners 2 ist, worauf der Reinigungsprozess gestartet werden kann.

Dabei ist es selbstverständlich auch möglich, dass bei einem Einsatz von Sensoren 13 eine automatische Aktivierung der entsprechenden Vorrichtung 6 oder 7 erfolgen kann. Beispielsweise kann vom Roboter 14 eine bestimmte Öffnung 9 angefahren werden, in die der Schweißbrenner 2 eingeführt wird. Der Sensor 13 erkennt die Anwesenheit des Schweißbrenners 2 in der Öffnung 9, wodurch von der Steuervorrichtung 10 die entsprechende Vorrichtung 6 oder 7 zum Reinigen des Schweißbrenners 2 aktiviert wird.

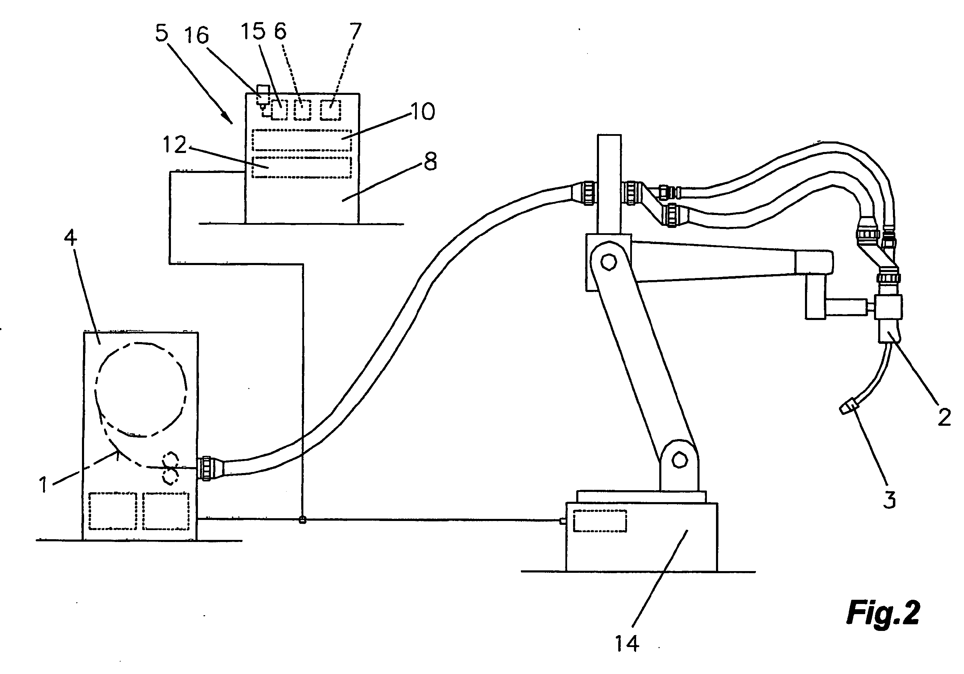

Beispielsweise ist für die Vorrichtung 6 zum magnetischen Reinigen eines Schweißbrenners 2 im Gehäuse 8 eine Wanne 15 für eine Flüssigkeit, vorzugsweise eine spezielle Reinigungsflüssigkeit, vorgesehen, in die der Schweißbrenner 2 eingetaucht wird, um die daran anhaftenden Metallspritzer abzukühlen. Neben der Wanne 15 kann ein Nachfüllbehälter 16, wie aus Fig. 2 ersichtlich, beispielsweise in Form einer Flasche angeordnet werden, über den die Wanne 15 mit Flüssigkeit versorgt werden kann. Hinter der Wanne 15 ist die Spule der Vorrichtung 6 in einer Öffnung 9 des Gehäuses 8 platziert. In die Spule wird der Schweißbrenner 2 nach dem Tauchen in die Wanne 15 platziert und es wird von der Steuervorrichtung 10 die Spule aktiviert, also ein Energieversorgung eingeleitet. Nach dem Versorgen der Spule mit elektrischem Strom, also durch das Aktivieren der Vorrichtung 6, werden die Metallspritzer am Schweißbrenner 2 berührungslos entfernt. Auf den genauen Funktionsablauf wird nicht näher eingegangen, da dieser aus dem im Stand der Technik genannten Dokumenten entnommen werden kann. Nach dem Aktivieren der Spule fallen die Verunreinigungen in einen unter der Spule angeordneten Abfallbehälter (nicht dargestellt). Dieser Abfallbehälter kann durch Öffnen eines Teiles des Gehäuses 8 leicht entfernt und entleert werden. Bei diesem Reinigungsverfahren ist es auch möglich, dass anstelle des Nachfüllbehälters 16 in Form einer Flasche ein entsprechend großer Nachfüllbehälter im Gehäuse 8 angeordnet ist und dieser über eine Leitung und eine Pumpe mit der Wanne 15 verbunden ist (nicht dargestellt). Dadurch können besonders lange Einsatzzeiten der Reinigungsvorrichtung 5 erreicht werden, welche insbesondere in der Autoindustrie mit Roboterschweißanlagen 14 von Bedeutung sind. Die Nachfüllung der Wanne 15 mit Flüssigkeit erfolgt dabei vorzugsweise vollautomatisch.

Weiters ist nunmehr die Vorrichtung 7 zum Reinigen des Schweißbrenners 2 mit kaltem Medium im Gehäuse 8 der Reinigungsvorrichtung 5 integriert, wie diese beispielsweise in der DE 100 63 572 A1 beschrieben ist. Hierzu ist wiederum am Gehäuse 8 eine Öffnung 9 vorgesehen, wobei im Inneren des Gehäuses 8 dieser Öffnung 9 die einzelnen Komponenten der Vorrichtung 7 angeordnet sind, sodass durch einfaches Einführen des Schweißbrenners 2 eine Reinigung mit CO₂-Trockeneis durchgeführt werden kann. Die Energieversorgung und Steuerung der Vorrichtung 7 erfolgt durch die gemeinsamen Komponenten, insbesondere die Versorgungseinrichtung 12, die Steuervorrichtung 10 und die der Ein-/Ausgabevorrichtung 11.

Selbstverständlich kann auch die Auswahl der entsprechenden Vorrichtung 6 oder 7 automatisch erfolgen. Dabei kann die Reinigungsvorrichtung 5 mit einem Schweißgerät 4, wie dies schematisch in Fig. 2 dargestellt ist, und/oder einem Roboter 14 über entsprechende Leitungen verbunden sein, sodass über diese Leitung Daten zwischen den Anlagen bzw. Geräten ausgetauscht werden können. Wird nunmehr beispielsweise am Schweißgerät 4 ein bestimmtes Schweißmaterial, also ein entsprechender Schweißdraht 1, ausgewählt und/oder ein spezieller Schweißbrenner 2, der nur mit einem bestimmten Reinigungsverfahren gereinigt werden kann, eingesetzt, so können diese Daten an die Reinigungsvorrichtung 5 übertragen werden. Diese Daten werden von der in der Reinigungsvorrichtung 5 angeordneten Steuervorrichtung 10 ausgewertet und die entsprechende Vorrichtung 6 oder 7 zum Reinigen des Schweißbrenners 2 aktiviert bzw. eingesetzt.

Hierbei ist es beispielsweise auch möglich, dass vor jedem Reinigungsprozess vom Schweißgerät 1 oder Roboter 14 der Reinigungsvorrichtung 5 mitgeteilt wird, welcher Typ des Schweißbrenners 2 und/oder des Schweißmaterials bzw. Schweißdrahts 1 eingesetzt wurde, sodass von der Reinigungsvorrichtung 5 die entsprechende Vorrichtung 6 oder 7 aktiviert werden kann. Dabei kann beispielsweise von der Reinigungsvorrichtung 5 die entsprechende Position, also die entsprechende Öffnung 9 der Vorrichtung 6, 7, in der der Schweißbrenner 2 eingeführt werden muss, rückübersandt werden, sodass der Roboter 14 den Schweißbrenner 2 richtig positionieren kann und somit der Schweißbrenner 2 gereinigt werden kann. Durch einen derartigen Datenaustausch ist es in einfacher Form möglich, die Reinigungsvorrichtung 5 für unterschiedliche Schweißanlagen mit den unterschiedlichsten Schweißbrennern 2 und/oder Schweißmaterialien bzw. Schweißdrähten 1 zu nützen, da vor jedem Reinigungsvorgang immer ein Datenaustausch durchgeführt und die bestmögliche Vorrichtung 6 oder 7 zur Reinigung ausgewählt werden kann. Damit können mehrere Roboteranlagen 14 gleichzeitig eine einzige Reinigungsvorrichtung 5 benutzen, wodurch erhebliche Kosten eingespart werden können.

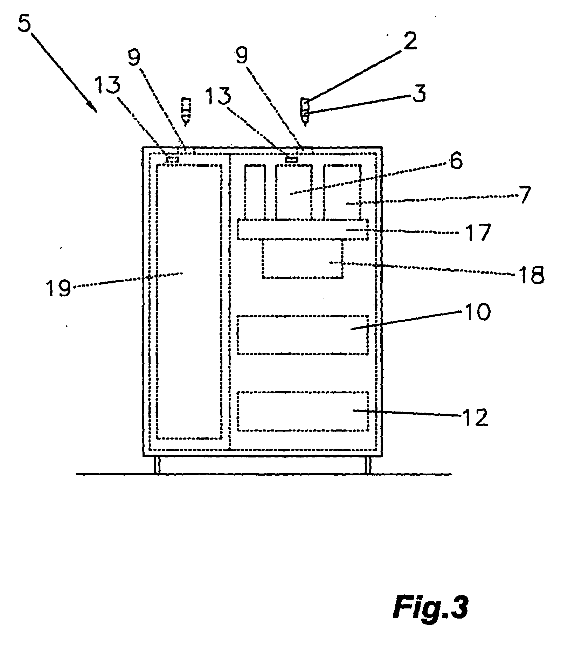

Entsprechend Fig. 3 können die einzelnen unterschiedlichen Vorrichtungen 6, 7 zum Reinigen des Schweißbrenners 2 auch auf zumindest einer Montageplatte 17 angeordnet sein, die im Inneren des Gehäuses 8 verstellbar, beispielsweise verschwenkbar, höhenverstellbar usw., angeordnet ist. Damit wird nur mehr eine Öffnung 9 am Gehäuse 8 zum Einführen des Schweißbrenners 2 benötigt, und im Inneren des Gehäuses 8 immer die entsprechenden Komponenten bzw. Baugruppen der Öffnung 9 zugewiesen. Hierbei ist mit der Montageplatte 17 eine Verstellvorrichtung 18 verbunden, sodass durch entsprechende Ansteuerung der Verstellvorrichtung 18 die entsprechende Vorrichtung 6 oder 7 bzw. Komponente daraus in Position zur Öffnung 9 gebracht werden können. Wird hierbei beispielsweise bei einem in der Öffnung 9 positionierten Schweißbrenner 2 eine andere Komponente oder Baugruppe benötigt, so wird die Montageplatte 17 vor dem Verdrehen abgesenkt und anschließend erst die entsprechende Komponente ausgewählt, sodass durch Auffahren der Montageplatte 17 sich der Schweißbrenner 2 wieder in dieser positioniert ist. Dies hat den Vorteil, dass bei Roboterschweißanlangen 14 nur eine einzige Position programmiert werden muss und somit der Schweißbrenner 2 über den Roboter 14 über den gesamten Reinigungsprozess in dieser Position gehalten werden kann, sodass eine noch schnellere Reinigung des Schweißbrenners 2 erfolgen kann. Damit wird auch eine sehr rasche Installation der Reinigungsvorrichtung 5 geschaffen, da nur eine Position am Roboter 14 programmiert werden muss und die Wechselabläufe zwischen den einzelnen Komponenten bzw. Baugruppen vom Hersteller der Reinigungsvorrichtung 5 bereits definiert wurden.

Auch kann bei einer derartigen kombinierten Reinigungsvorrichtung 5 bzw. einem derartigen kombinierten Reinigungsgerät, wie in den zuvor beschriebenen Fig. 1 bis 3 erläutert, der zu reinigende Schweißbrenner 2 die verschiedenen Vorrichtungen 6, 7 aufeinanderfolgend durchlaufen, indem der Schweißbrenner 2 in sämtliche oder einer bestimmte Auswahl der möglichen Vorrichtungen 6, 7 bzw. Komponenten positioniert und gereinigt wird. Somit wird eine besonders gute Reinigung des Schweißbrenners 2 mit den unterschiedlichen Reinigungsprozessen erzielt. Es können noch weitere aus dem Stand der Technik bekannte Reinigungsvorrichtungen bzw. Reinigungsgeräte, wie beispielsweise mechanische Reinigungsvorrichtungen in Form von Fräsvorrichtungen, zusätzlich der Vorrichtungen 6, 7 im Gehäuse 8 integriert werden, wobei alle eingesetzten Vorrichtungen 6, 7 zum Reinigen des Schweißbrenners 2 vorzugsweise eine gemeinsame Versorgungseinrichtung 12, Steuervorrichtung 10, Ein-/Ausgabevorrichtung 11 und eventuell weitere gemeinsame Komponenten aufweisen.

Es ist auch möglich, zusätzliche Komponenten bzw. Baugruppen in die Reinigungsvorrichtung 5 zu integrieren. Durch den Einsatz einer Flüssigkeit bzw. einer Reinigungsflüssigkeit für die magnetische Reinigung bleiben oftmals Flüssigkeitsrückstände am Schweißbrenner 2 bestehen. Um diese Rückstände zu beseitigen, ist in der Reinigungsvorrichtung 5 eine Gebläsevorrichtung 19 angeordnet sein. Diese Gebläsevorrichtung 19 ist vorzugsweise getrennt von der Öffnung 9 zum Reinigen des Schweißbrenners 2 angeordnet, sodass die abgeblasene Flüssigkeit nicht mit den anderen Komponenten der Reinigungsvorrichtung 5 in Berührung kommt. Hierzu kann das Gehäuse 8 eine eigene Öffnung 9 aufweisen, durch die der Schweißbrenner 2 nach vollzogener Reinigung eingeführt wird, wie dies schematisch in Fig. 3 eingezeichnet ist. Die Gebläsevorrichtung 19 hat nunmehr die Funktion, dass der Schweißbrenner 2 mit einem entsprechenden Luftstrom beblasen wird, sodass die sich am Schweißbrenner 2 befindlichen Flüssigkeitsreste abgeblasen werden. Um eine optimale Säuberung des Schweißbrenners 2 von den Flüssigkeitsresten zu erreichen, kann beispielsweise ein Hochdruckluftgebläse eingesetzt werden. Auf eine detaillierte Darstellung der Gebläsevorrichtung 19 wird verzichtet, da hierzu wiederum jegliches aus dem Stand der Technik bekannte Luftgebläse eingesetzt werden kann und lediglich nur eine konstruktive Anpassung für den Einbau vorgenommen werden muss.

## Patentansprüche

1. Reinigungsvorrichtung zum Reinigen von Schweißbrennern mit einer Vorrichtung zur elektromagnetischen Reinigung des Schweißbrenners, bestehend aus einer Spule mit einer Öffnung zur Einbringung des Schweißbrenners und gegebenenfalls einer Vorrichtung zum Aufbringen von Reinigungsflüssigkeit an die Spitze des Schweißbrenners, wobei zusätzlich zur Vorrichtung (6) für das magnetische Reinigen zumindest eine zweite Vorrichtung (7) zum Reinigen des Schweißbrenners (2) angeordnet ist, welche weitere Vorrichtung (7) zum Reinigen des Schweißbrenners (2) mittels eines kalten Mediums, insbesondere von CO₂-Trockeneis, ausgebildet ist, **dadurch gekennzeichnet, dass** die Reinigungsvorrichtungen (6, 7) in einem gemeinsamen Gehäuse (8) angeordnet sind,
dass im Gehäuse (8) eine gemeinsame Steuervorrichtung (10), eine gemeinsame Ein-/Ausgabevorrichtung (11) und eine gemeinsame Versorgungseinrichtung (12) bzw. Stromquelle zur Steuerung, Einstellung und Energieversorgung der Reinigungsvorrichtungen (6, 7) angeordnet sind, und dass weiters, insbesondere im Gehäuse (8), eine Gebläsevorrichtung (19) angeordnet ist, um Flüssige keitsrückstände am Schweißbrenner (2) nach dem Reinigungsprozess zu beseitigen.

2. Reinigungsvorrichtung nach Anspruch 1, **dadurch gekennzeichnet, dass** im Gehäuse (8) ein Abfallbehälter zur Aufnahme der abgereinigten Verunreinigungen angeordnet ist.

3. Reinigungsvorrichtung nach Anspruch 1 oder 2, **dadurch gekennzeichnet, dass** die Vorrichtungen (6, 7) im Inneren des Gehäuses (8) angeordnet sind, wobei am Gehäuse (8) Öffnungen (9) zum Einführen des Schweißbrenners (2) vorgesehen sind.

4. Reinigungsvorrichtung nach einem oder mehreren der Ansprüche 1 bis 3, **dadurch gekennzeichnet, dass** die Vorrichtungen (6, 7) zum Reinigen des Schweißbrenners (2) auf zumindest einer Montageplatte (17) angeordnet sind, die verstellbar im Gehäuse (8) positioniert ist.

5. Reinigungsvorrichtung nach einem oder mehreren der Ansprüche 1 bis 4, **dadurch gekennzeichnet, dass** weitere Vorrichtungen (6, 7) zum Reinigen von Schweißbrennern (2), wie beispielsweise met chanische Reinigungsvorrichtungen in Form von Fräsvorrichtungen, zusätzlich einer Vorrichtung (6, 7) im Gehäuse (8) integriert sind.

## Claims

1. A cleaning device for cleaning welding torches, including a device for the electromagnetic cleaning of the welding torch, which is comprised of a coil having an opening for the introduction of the welding torch and, optionally, a device for the application of cleaning fluid to the tip of the welding torch, wherein, in addition to the device (6) for magnetic cleaning, at least one further device (7) for cleaning the welding torch (2) is provided, which further device (7) is configured to clean the welding torch (2) with a cold medium, in particular CO₂ dry ice, **characterized in that** the cleaning devices (6, 7) are arranged in a common housing (8), that a common controller (10), a common input/output device (11) and a common power supply (12) and/or current source for the control, adjustment and energy supply of the cleaning devices (6, 7) are arranged in the housing (8), and that, furthermore, a blower means (19) is arranged, in particular, in the housing (8) to remove liquid residues from the welding torch (2) after the cleaning process.

2. The cleaning device according to claim 1, **characterized in that** a waste container is arranged in the housing (8) to receive the cleaned-off impurities.

3. The cleaning device according to claim 1 or 2, **characterized in that** the devices (6, 7) are arranged in the interior of the housing (8), wherein openings (9) are provided on the housing (8) for the introduction of the welding torch (2).

4. The cleaning device according to one or several of claims 1 to 3, **characterized in that** the devices (6, 7) for cleaning the welding torch (2) are arranged on at least one mounting plate (17) which is adjustably positioned in the housing (8).

5. The cleaning device according to one or several of claims 1 to 4, **characterized in that** further devices (6, 7) for cleaning welding torches (2), such as, for instance, mechanical cleaning devices in the form of milling means, are integrated in the housing (8) in addition to a device (6, 7).

## Revendications

1. Dispositif de nettoyage pour nettoyer des chalumeaux avec un dispositif de nettoyage électromagnétique du chalumeau, constitué d'une bobine avec une ouverture pour introduire le chalumeau et, éventuellement, d'un dispositif d'application de liquide de nettoyage à la pointe du chalumeau, dans lequel est agencé, en plus du dispositif (6) destiné au nettoyage magnétique, au moins un deuxième dispositif (7) de nettoyage du chalumeau (2), cet autre dispositif (7) étant réalisé pour nettoyer le chalumeau (2) au moyen d'un milieu froid, en particulier de glace sèche (CO₂), **caractérisé en ce que** les dispositifs de nettoyage (6, 7) sont agencés dans un boîtier commun (8), **en ce qu'**un dispositif de commande commun (10), un dispositif d'entrée/sortie commun (11) et un dispositif d'alimentation commun (12) ou une source de courant commune, sont agencés dans le boîtier (8) pour commander, régler et alimenter en énergie les dispositifs de nettoyage (6, 7) et **en ce qu'**il est en outre agencé, en particulier dans le boîtier (8), un dispositif de ventilateur (19) pour enlever des résidus de liquide sur le chalumeau (2) après le processus de nettoyage.

2. Dispositif de nettoyage selon la revendication 1, **caractérisé en ce qu'**un collecteur de déchets destiné à recevoir les impuretés enlevées par nettoyage, est agencé dans le boîtier (8).

3. Dispositif de nettoyage selon la revendication 1 ou 2, **caractérisé en ce que** les dispositifs (6, 7) sont agencés à l'intérieur du boîtier (8), des ouvertures (9) étant prévues sur le boîtier (8) pour introduire le chalumeau (2).

4. Dispositif de nettoyage selon l'une quelconque ou plusieurs des revendications 1 à 3, **caractérisé en ce que** les dispositifs (6, 7) pour nettoyer le chalumeau (2) sont agencés sur au moins une plaque de montage (17) qui est positionnée de manière ajustable dans le boîtier (8).

5. Dispositif de nettoyage selon l'une quelconque ou plusieurs des revendications 1 à 4, **caractérisé en ce que** d'autres dispositifs (6, 7) pour nettoyer des chalumeaux (2), tels que des dispositifs de nettoyage mécanique sous forme
de dispositifs de fraisage, sont intégrés au boîtier (8) en complément d'un dispositif (6, 7).
